# EUROPEAN PATENT APPLICATION

(11) **EP 2 963 290 A1**
(43) Date of publication of application: **06.01.2016**
(21) Application number: 14175522.3
(22) Date of filing: 03.07.2014
(51) Int. Cl.: F03G 6/00, F03G 6/06

(54) **Solar tower plant**

(71) Applicant: NEM Energy B.V., 2595 BN 'S-Gravenhage (NL)
(72) Inventor: Elsaket, Gamal, 2252 CA Voorschoten (NL)
(74) Representative: Maier, Daniel Oliver

(57) **Abstract**

The present invention relates to a solar tower plant comprising a heat transfer fluid loop (10) with a tower receiver (13), a working fluid loop (30) with a turbine (31), a heat exchange device (40), transferring heat from a heat transfer fluid (H,H'), circling in the heat transfer fluid loop (10), to a working fluid (W,S), circling in the working fluid loop (30). The heat transfer fluid loop (10) further comprises a cold-fluid storage device (11), a hot-fluid storage device (12), a pump device (14) for transferring the heat transfer fluid (H,H') via a riser pipe arrangement (15) to the tower receiver (13)and a pressure regulating device (20,20') arranged such in the heat transfer fluid loop (10), that a static pressure of the transfer fluid (H), heated in the tower receiver (13), is kept constant in a downcomer pipe arrangement (16) during the operation of the solar tower plant.

## Description

The present invention relates to a solar tower plant according to claim 1.

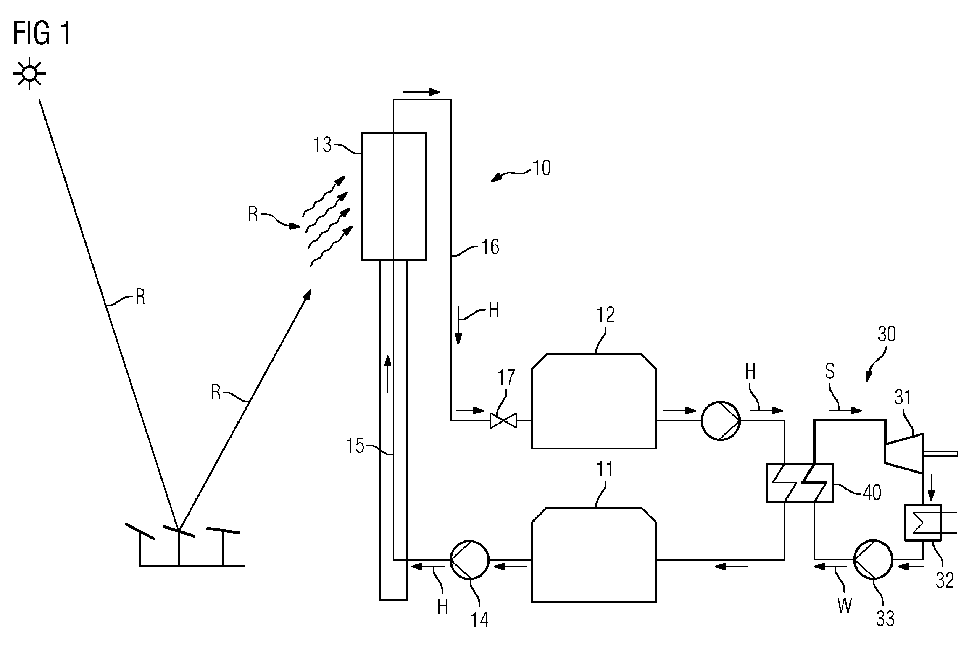

Thermal energy storage in solar tower plants is often realized by two molten salt storage devices, namely one hot-molten salt storage device and one cold-molten salt storage device. Figure 1 shows a common known configuration of such a molten salt solar tower power plant. A salt pump pumps cold-molten salt, typically in the range of 280 to 300°C, from an atmospheric cold-molten salt storage device at ground level through a riser pipe arrangement to a solar receiver on the top of the tower. Such a tower has a typical high of 70 to 250 meter. In the receiver, the molten salt is heated up to around 565°C bulk temperature by concentrated sunlight from a field of mirrors like e.g. heliostats, which are allocated around the tower. Then, in a downcomer pipe arrangement, the heated hot-molten salt flows back to an atmospheric hot-molten salt storage device at the ground level via a throttling valve. A heat exchange device transfers the heat from a heat transfer fluid, circling in the heat transfer fluid loop, to a working fluid, circling in a working fluid loop. The working fluid drives a turbine which is connected to a generator.

The power of the pump is used to overcome the static pressure, which results from the geodetic height difference between the receiver at the top of the tower and ground level, where the storage devices are located and to overcome the flow resistance in the receiver tubing and piping. Thus, the pump power is considered as a parasitic power consumption, which consumes a significant part of total gross electric power generation of the molten salt solar tower plant in the range of 5 to 10%. From total pump power, typically approximately 50 to 66% is used to overcome static pressure and the remainder to overcome flow resistance in the receiver. Due to the limitation in maximum molten salt film temperature (typically 600°C) in the tubes of the receiver for the commonly applied, state-of-the-art, molten salt mixtures (60% NaNO₃, 40% KNO₃), it is required to pump the salt through the receiver with high velocities, typically up to 6 m/s, in order to keep maximum salt film temperature below this limit. This leads to high pressure drop through the receiver panels and consequently to high parasitic pumping power to overcome flow resistance.

Moreover, the molten salt flow cycle as the heat transfer fluid loop is typically open. So the static pressure energy of the salt in the downcomer pipe arrangement, resulting from salt density and the tower height, is lost by throttling the pressure down to atmospheric pressure in the valve located at ground level in the downcomer pipe arrangement, close to hot salt storage device. The throttle valve in the open cycle is required to assure that the downcomer pipe arrangement is always completely filled and to assure calm release of hot molten salt in the hot-molten salt storage device. The problem in this case is that by the throttling, the static pressure is completely lost and therewith (most of) the energy from the cold-molten salt pump that was required to overcome the static pressure is lost.

Alternative solutions beside the usage of molten salt storage devices for thermal energy storage are already known from the state of the art. E.g. US 2008/006736 A1 shows a principle of a solar tower plant with a gas-rock thermal energy storage device.

Today, in state of the art solar tower plants, the two above problems are not solved. There is neither energy recovery nor is there any means to reduce flow resistance.

Therefore, it is an object of the present invention to provide an improved solar tower plant, which overcomes the before mentioned problems.

This object is achieved by a solar tower plant according to claim 1. Hence, according to the present invention, the solar tower plant comprising a heat transfer fluid loop with a tower receiver, a working fluid loop with a turbine, a heat exchange device, transferring heat from a heat transfer fluid, circling in the heat transfer fluid loop, to a working fluid, circling in the working fluid loop, wherein the heat transfer fluid loop further comprises a cold-fluid storage device, a hot-fluid storage device, a pump device for transferring the heat transfer fluid via a riser pipe arrangement to the tower receiver and a pressure regulating device arranged in the heat transfer fluid loop, such that the static pressure of the transfer fluid, heated in the tower receiver, is kept constant in a downcomer pipe arrangement during the operation of the solar tower plant. In the content of the present invention the term "constant" means the same value of the static pressure or nearly the same value, which lies in a tolerance band of the static pressure value.

With the present invention, the potentially energy of the static pressure of the heated molten salt in the downcomer pipe arrangement is used for regulating the pressure in the heat transfer fluid loop.

In a preferred embodiment, an intermediate heat exchange device, arranged at the lower end of the downcomer pipe arrangement, is used as the pressure regulating device. Normally the lower end of the downcomer is at ground level or close to the ground level.

Here the intermediate heat exchange device is arranged in such a way that the transfer fluid, heated in the tower receiver, is circling via the downcomer pipe arrangement, that intermediate heat exchange device, the pump device and the riser pipe arrangement in a first, receiver loop and the transfer fluid of this first loop are exchanging heat with the transfer fluid of a second, storage loop, where the transfer fluid is circling between the cold-fluid storage device and the hot-fluid storage device via the heat exchange device. The advantages of this embodiment are:
- Material and cost saving solution to reduce the necessary power for the pump device in the heat transfer fluid loop.
- Lower parasitic power consumption to overcome static pressure, which leads to an increasing overall plant efficiency. Through increased efficiency, lower capital cost due to saving on required reflective area of the heliostat solar field for the same plant nominal capacity.
- Further optimization for tower height. For central receiver power plants, depending on the system size, a higher tower could result in higher optical efficiency, which is the main drive for the whole system efficiency. In the state of the art molten salt solar tower plants, tower height is optimized for lowest leveled costs of energy and this optimization is negatively affected by increase in parasitic power required to pump up the salt up to the receiver when tower height is increased.

In a further preferred embodiment, the intermediate heat exchange device is arranged in such a way, that the heat transfer fluid of the receiver loop and the storage loop are completely separated. Then the heat transfer fluid of the receiver loop can be different to the heat transfer fluid of the storage loop. Beside the advantages of the before mentioned embodiment, this embodiment has additional advantages. It allows using a heat transfer fluid in the receiver loop different from the heat transfer fluid used in storage loop.

Preferably the heat transfer fluid is based on molten salt. Currently the most commonly used molten salt is a mixture of 60% NANO and 40% KNO. This salt has an operation range between maximum allowable 600°C down to temperature of 260°C. Today this molten salt represents the best economic solution with lowest cost. Other salts are significantly more expensive. In the preferred embodiment more expensive molten salt with higher salt temperature can be used in the receiver loop due to the less amount of molten salt required in the receiver loop in comparison to the amount of molten salt required in the storage loop for the two storage devices. Thus, higher salt temperature in the receiver loop allows the use of the maximum allowed temperature of the typical salt in the storage loop. This leads to less energy losses and higher plant efficiency. Furthermore, using molten salt in the receiver loop with higher maximum operating temperature than the salt which is used today, will allow lower requirement for velocities in the receiver tubes of the tower receiver. Consequently, lower pressure drop can be achieved and thus, lower pumping power is required and less parasitic power consumption to overcome flow resistance.

In another alternative embodiment, a further turbine is used for energy recovery. Here, the energy in the static pressure in the downcomer pipe arrangement is converted by the turbine and a generator into electricity. The advantage of this concept is also a lower parasitic power consumption and an increased overall solar tower plant efficiency. Due to the extra electricity generated by the added turbine, the required power from the turbine of the working fluid loop will be less and this will also lead to lower costs of the solar tower plant.

The invention now will be explained in more detail with reference to the appended drawings. The drawings show only an example of a practical embodiment of the invention, without limiting the scope of the invention, in which:
- Figure 1: shows a schematic view of a state of the art solar tower plant,
- Figure 2: shows a preferred embodiment of the present invention,
- Figure 3: shows a further preferred embodiment of the present invention,
- Figure 4: shows an alternative embodiment of the present invention.

Figure 1 shows a state of the art configuration of a molten salt solar tower power plant. A pump 14 pumps the heat transfer fluid H, here cold molten salt typically in the range of 280 to 300°C, from an atmospheric cold-fluid storage device 11 at ground level through a riser pipe arrangement 15 to a solar heated tower receiver 13 on the top of a tower. Such a tower has a typical height of 70 to 250 meter. In the tower receiver 13, the heat transfer fluid H is heated up to around 565°C bulk temperature by concentrated sunlight radiation R from a field of mirrors like, e.g. heliostats, which are allocated around the tower. In a downcomer pipe arrangement 16, the heated fluid H flows back to an atmospheric hot-fluid storage device 12 at ground level via a throttling valve 17. In a heat exchange device 40, the heat from the heated transfer fluid H, circling in the heat transfer fluid loop 10, is transferred to a working fluid, circling in a working fluid loop 30. Then, in that heat exchange device 40 the working fluid, which is at a condenser 32 in a liquid phase W and which is driven by a liquid pump 33 towards the heat exchange device 40, is transferred into a vapor phase S. In a turbine 31 and a following but not shown generator, thermal energy of the vapor S is converted into electrical energy.

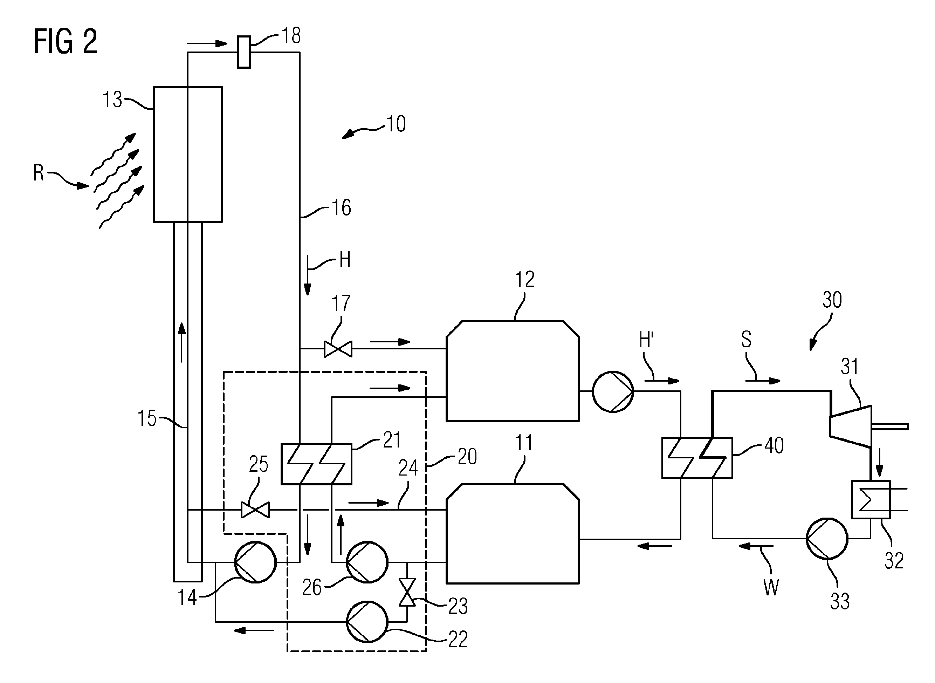

Figure 2 shows a preferred embodiment of the present invention, where a pressure regulating device 20 with an intermediate heat exchange device 21 is arranged at the lower end of the downcomer pipe arrangement 16. With it, the heat transfer fluid H, heated in the tower receiver 13, is circling via the downcomer pipe arrangement 16, the intermediate heat exchange device 21, the pump device 14 and the riser pipe arrangement 15 in an almost closed receiver loop. In this embodiment, the heat transfer fluid H of this receiver loop is exchanging heat with the transfer fluid H' of a storage loop, whereby heat transfer fluid H' is circling between the cold-fluid storage device 11 and the hot-fluid storage device 12 via the heat exchange device 40. With such an intermediate heat exchange device 21, the receiver loop and the storage loop can be separated up to a minimum of heat transfer fluid exchange to avoid static pressure loss in the receiver loop itself. Thus the basic idea of the present invention is based on a concept of two almost separated heat transfer fluid loops, which keeps the static pressure in the downcomer pipe arrangement nearly constant. Thus there is no significant change in the static pressure.

The embodiment, shown in Figure 2 shows an arrangement of a pressure regulating device 20 with an intermediate heat exchange device 21, where both loops can utilize the same molten salt composition, like e.g. 60% NaNO₃ and 40% KNO₃. The receiver loop is an extensive closed loop and molten salt as heat transfer fluid H is pumped through the tower receiver 13 and the intermediate heat exchange device 21. The static pressure at ground level in the downcomer pipe arrangement 16 is no longer throttled. The only pumping power required here is to overcome the flow resistance and some static pressure because of density differences in the downcomer, but drastically lower than in the state of the art designs. Significantly less pump power is spilled through the present invention on static pressure increase. The thermal energy from the receiver loop is transferred to the storage loop by means of the heat exchanger 21 at ground level. The storage loop finally charges the thermal energy in the hot-fluid storage device 12. Additional equipment can be implemented optionally to optimize this embodiment. Thus, the receiver loop further can comprise beside the low-head-high-flow circulation pump 14, a high-head low-flow start-up pump 22 with a throttle 23 to fill in the receiver loop with molten salt H, when the solar tower plant is started up, a draining system 24 with a throttle 25 at ground level to drain the riser pipe arrangement 15 and the downcomer pipe arrangement 16 if the system tripped, and an expansion vessel 18 - typically but not necessarily close to the tower receiver 13 at the top of the tower - to allow for thermal expansion of the heat transfer fluid in the receiver loop when heated. In addition a low-head-high-flow circulation pump 26 are added. Further the throttle 17 allows to empty the downcomer pipe arrangement 16 and the tower receiver 13, similar to 25 draining system in case of trip.

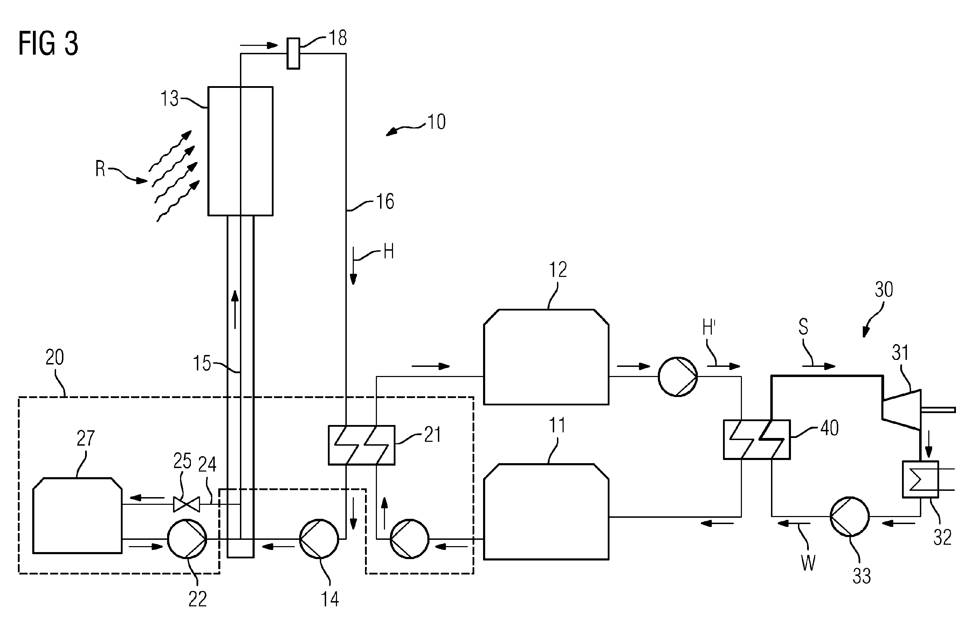

Figure 3 shows an arrangement quite similar to Figure 2 in terms of using an intermediate heat exchanger 21, a starting-up pump 22, a draining system 24 with a throttle 25, and an expansion vessel 18. The difference between the embodiment shown here in Figure 3 and that one shown in Figure 2 is that in this concept, the heat transfer fluid H in the receiver loop is different from the heat transfer fluid H' used in the storage loop and therefore, both loops are separated completely. Then, any heat transfer medium in principle can be used, provided it is available in the liquid phase at atmospheric pressure in the operating temperature range, typically from 200°C to 700°C. The heat transfer fluid H of the receiver loop can be e.g. a molten salt other than 60% NaNO₃ 40% KNO₃ composition, or a liquid metal. A buffer storage device 27 is required to drain the receiver loop.

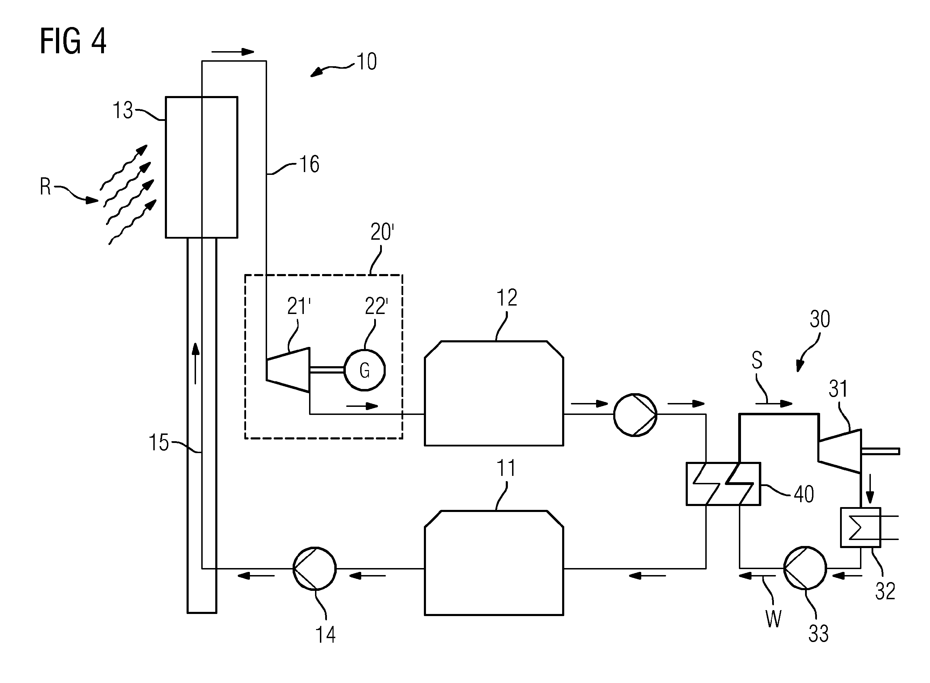

Figure 4 shows a possible embodiment of the present invention, where the pressure regulating device 20' comprises a turbine 21'. Here a hydraulic turbine is provided in the downcomer pipe arrangement 16, ideally at ground level, to drive a generator 22'. The static pressure in the heat transfer fluid H is used to drive the turbine 21' and the associated generator 22'. The energy of the pump device 14 that was required to overcome the static pressure is then at least partly recovered in the turbine 21', generator 22' combination by converting to electricity.

## Claims

1. Solar Tower Plant comprising
- a heat transfer fluid loop (10) with a tower receiver (13),
- a working fluid loop (30) with a turbine (31),
- a heat exchange device (40), transferring heat from a heat transfer fluid (H,H'), circling in the heat transfer fluid loop (10), to a working fluid (W,S), circling in the working fluid loop (30),
the heat transfer fluid loop (10) further comprises:
- a cold-fluid storage device (11),
- a hot-fluid storage device (12),
- a pump device (14) for transferring the heat transfer fluid (H,H') via a riser pipe arrangement (15) to the tower receiver (13)
**characterized in that**
- a pressure regulating device (20,20') arranged such in the heat transfer fluid loop (10), that a static pressure of the transfer fluid (H), heated in the tower receiver (13), is kept constant in a downcomer pipe arrangement (16) during the operation of the solar tower plant.

2. Solar Tower Plant according to Claim 1,
**characterized in that**
the pressure regulating device (20) of that heat transfer fluid loop (10)is an intermediate heat exchange device (21), arranged at the lower end of the downcomer pipe arrangement (16) such that
- the transfer fluid (H), heated in the tower receiver (13), is circling via the downcomer pipe arrangement (16), that intermediate heat exchange device (21), the pump device (14) and the riser pipe arrangement (15) in a receiver loop and
- the transfer fluid (H) of this receiver loop is exchanging heat with the transfer fluid (H') of a storage loop, whereby the transfer fluid (H') is circling between the cold-fluid storage device (11) and the hot-fluid storage device (12) via the heat exchange device (40).

3. Solar Tower Plant according to Claim 2,
**characterized in that**
the heat transfer fluid (H) of the receiver loop is different to the heat transfer fluid (H')of the storage loop.

4. Solar Tower Plant according to Claim 1,
**characterized in that**
the pressure regulating device (20') of that heat transfer fluid loop (10) is a further turbine (21'), arranged at the lower end of the downcomer pipe arrangement (16) and close to the hot- fluid storage device (12).

5. Solar Tower Plant according to any of Claims 1 to 4,
**characterized in that**
the heat transfer fluid (H,H') is based on molten salt.
